# EUROPÄISCHE PATENTSCHRIFT

(11) **EP 0 723 741 B1**
(45) Veröffentlichungstag und Bekanntmachung des Hinweises auf die Patenterteilung: **01.09.1999**
(21) Anmeldenummer: 96100722.6
(22) Anmeldetag: 19.01.1996
(51) Int. Cl.: A01D 78/12

(54) **Kreiselrechen für eine Heuwerbungsmaschine**
Rotary rake for a hay making machine
Râteau rotatif d'une machine pour la fenaison

(30) Priorität: 28.01.1995 DE 19502710
(43) Veröffentlichungstag der Anmeldung: 31.07.1996
(73) Patentinhaber: Maschinenfabriken Bernard Krone GmbH, D-48480 Spelle (DE)
(72) Erfinder: Krone, Bernard, D-48480 Spelle (DE); Horstmann, Josef, Dipl.-Ing., D-49479 Ibbenbüren (DE)

(56) Entgegenhaltungen:
- EP-A- 0 130 617
- EP-A- 0 590 311
- DE-A- 1 960 236
- DE-A- 2 059 269
- DE-B- 1 782 006
- FR-A- 2 110 930

## Beschreibung

Die Erfindung bezieht sich auf einen Kreiselrechen für eine Heuwerbungsmaschine, insbesondere für einen Kreiselschwader nach dem Oberbegriff des Anspruchs 1.

Es sind Kreiselrechen mit einem geschlossenen Kreiselgehäuse bekannt, in denen mit Zinken bestückte Zinkenarme drehbar und von einer innerhalb des Kreiselgehäuses angeordneten Steuerkurve gesteuert werden.

In einer CH-PS 499 951 und einer gleichlautenden DE-OS 19 60 236 ist eine Heuerntemaschine mit mindestens einem Rechrad beschrieben, das für einen günstigen Transport als Ladegut auf Bahnwagen oder auf einem Lastkraftwagen in teilweise demontiertem und wenig Laderaum beanspruchenden Zustand gebracht werden kann. Am Bestimmungsort können dann insbesondere geteilte Zinkenträger vom Empfänger ohne besondere Fachkenntnisse wieder am Rechrad komplettiert werden. Das Rechrad der Heuwerbungsmaschine eignet sich besonders zum Schwaden von Erntegut und dreht sich bei der Arbeit um eine etwa senkrecht ausgerichtete Achse. An äußeren Enden mit Zinken bestückte Zinkenträger werden über Steuerkurbeln mit außermittig angeordneten Steuerrollen in einer Steuerbahn gesteuert. Die Steuerbahn liegt innerhalb eines geschlossenen und als Gußteil ausgebildeten Gehäuses, welches wiederum als Gußgehäuse mit einem Anschraubflansch ausgebildete Traglager aufweist, die auf den Zinkenträgern axial aufgeschoben werden und eine Lagerstelle für diese bilden. Ein Abschnitt eines Traglagers ist zusammen mit einem Ende des Zinkenträgers und einer Steuerkurbel in eine Bohrung des Steuerbahngehäuses einführbar und über eine mit Schrauben ausgebildete Flanschverbindung am Steuerbahngehäuse befestigbar. Derartige, auf dem Wege des Gießens hergestellte Gehäuse sind sehr aufwendig und erfordern eine Reihe von schwierigen Bearbeitungsgängen. Weiterhin erweist es sich als nachteilig, daß durch das Anschrauben der Traglager an das Steuerbahngehäuse die Kraftübertragung vom Zinkenträger auf das Steuergehäuse an einem Punkt erfolgt und an dieser Stelle hohe Beanspruchungsspitzen verursacht.

In einer weiteren EP 0 590 311 A1 wird vorgeschlagen, den Gehäusekörper aus zwei Hälften mit sich berührenden Planflächen herzustellen, die miteinander verschraubt sind. Im Bereich ihrer Außendurchmesser weisen die Gehäusehälften Ausstülpungen auf, in denen äußere Traglager aus Kunststoff eingelegt werden. Zusätzlich sind die Zinkentragarme in inneren Traglagern gelagert, die mit beiden Gehäusehälften verschraubt sind. Um bei einem solchen Kreiselkörper einen Zinkentragarm auszuwechseln, ist es erforderlich, den ganzen Gehäusekörper zu zerlegen. Daraus ergeben sich ein hoher Montageaufwand und damit auch hohe Reparaturkosten. Weiterhin ist es problematisch einen Gehäusekörper gegen den Austritt von flüssigen oder halbflüssigen Schmiermitteln durch Kunststoffbuchsen, in denen die Zinkentragarme drehbar gelagert sind, abzudichten.

Aufgabe der Erfindung ist es, einen Kreiselrechen für eine Heuwerbungsmaschine, insbesondere für einen Kreiselschwader, zu schaffen, bei dem die mit Zinken bestückten Zinkenarme dreh- und steuerbar im Kreiselgehäuse derartig aufgenommen und gelagert sind, daß das Kreiselgehäuse eine nach außen hin gegen Austritt von flüssigem oder halbflüssigem Schmiermittel abgedichtete Einheit darstellt. Weiterhin soll die Aufnahme bzw. Lagerung der Zinkenarme so ausgeführt sein, daß die mit einem Traglager und mit einer außermittig angeordneten Steuerrolle komplett montierten Zinkenarme in den Aufnahmeöffnungen des Kreiselgehäuses einsetz- und arretierbar sind, wobei die Kraftübertragung von den Zinkenarmen auf das Kreiselgehäuse an zwei möglichst weit auseinander liegenden Stellen erfolgt.

Zur Lösung dieser Aufgabe zeichnet sich der Kreiselrechen der obengenannten Art durch die im kennzeichnenden Teil des Anspruchs 1 angegebenen Merkmale aus. Hinsichtlich der weiteren Ausgestaltung der Erfindung wird auf die Ansprüche 2 bis 25 verwiesen.

Der erfindungsgemäße Kreiselrechen für eine Heuwerbungsmaschine, insbesondere für einen Kreiselschwader, weist ein Kreiselgehäuse auf, das nach außen hin gegen den Austritt von flüssigen bzw. halbflüssigen Schmiermitteln vollständig dicht ausgebildet ist und bei dem es möglich ist, die mit einem Traglager und einer außermittig angeordneten Steuerrolle bestückten Zinkenarme als montierte Kompaktbaugruppen von außen in dafür vorgesehene öffnungen im Kreiselgehäuse einzusetzen und zu arretieren. Zweckmäßigerweise sind nach besonderen Ausgestaltungen der Erfindung die Zinkenarme so ausgeführt, daß ein als Lagerhülse ausgebildetes und mit Gleitlagerbuchsen versehenes Traglager von der für die Lagerung im Kreiselgehäuse vorgesehenen Seite auf den Zinkenarm aufgeschoben und durch einen mit einer Steuerrolle bestückten Steuerarm auf dem Zinkenarm axial gesichert werden kann. Durch einen dem Traglager zugeordneten Radialdichtring wird eine dauerhafte Abdichtung der Zinkenarme gegenüber den Traglagern erreicht, so daß über zwei in den Traglagern angebrachte Bohrungen die Gleitlagerstellen des Zinkenarmes in den Traglagern mit Schmiermittel aus dem Kreiselgehäuse versorgt werden können.

Die Aufnahme bzw. Befestigung der Zinkenarme im Kreiselgehäuse erfolgt in U-förmig ausgebildeten Taschen, die mindestens zwei Öffnungen aufweisen, in denen das Traglager einsetzbar ist. Diese Öffnungen sind als Buchsen ausgebildet, wobei die äußere, an der den Zinken zugewandten Seite der U-förmigen Taschen eine Kegelbuchse ist. Da das Traglager ebenfalls einen kegelstumpfähnlichen Ansatz aufweist, entsteht beim Einführen der Traglager in die Öffnungen des Kreiselgehäuses eine Kegelverbindung, die selbsthemmend sein kann und dann keiner weiteren Arretierung bedarf. Es ist aber auch möglich, die Traglager mit den Zinkenarmen durch eine, an der den Zinken zugewandten Flanschseite der U-förmigen Taschen aufgeschraubte Deckplatte zu sichern und durch einen in der Trennfuge zwischen der Flanschseite und der Deckplatte eingelegten Dichtring für eine dauerhafte Abdichtung zu sorgen.

Das Kreiselgehäuse besteht vorteilhafterweise aus einem in sich formstabilen Gehäuseunterteil und einem deckelförmigen Gehäuseoberteil, wobei das Gehäuseunterteil eine Bodenplatte sowie eine dazu parallel verlaufende Deckronde beinhaltet, welche durch einen ringähnlichen Steg miteinander verbunden sind. Das Gehäuseunterteil ist als Schweißkonstruktion ausgeführt, so daß aufwendige und damit teuere, mechanische Bearbeitungsgänge vermieden werden. Der ringähnliche Steg besteht aus aneinander gereihten U-förmigen und als Preßteil gefertigten Taschen mit in den Flanschseiten angeordneten Öffnungen, die die Aufnahmestellen für die Traglager bilden. Die U-förmige Ausbildung der Taschen ist unter anderem deshalb notwendig, weil beim Einsetzen der als Kompaktbaugruppe montierten Zinkenarme mit Traglager sowie Steuerarm mit Steuerrolle in die Aufnahmestellen des Kreiselgehäuses die Kompaktbaugruppe zunächst leicht verschwenkt eingeführt werden muß, bis die Steuerrolle die innere, der Mitte des Kreiselgehäuses zugewandte Aufnahmestelle passiert hat. Dazu wird nahezu der gesamte Freiraum zwischen den beiden Aufnahmestellen der Taschen benötigt. Weiterhin erreicht man durch die U-förmige Ausbildung bzw. durch die in einem Abstand zueinander angeordneten Aufnahmestellen der Taschen eine gute Verteilung der durch die Recharbeit der Zinken entstehenden und von den Zinkenarmen auf das Kreiselgehäuse übertragenden Kräfte.

Durch die vorstehend beschriebenen Maßnahmen wird ein Kreiselrechen geschaffen, der bei Verwendung von flüssigen bzw. halbflüssigen Schmiermitteln im Kreiselgehäuse nahezu wartungsfrei ist und der im Reparaturfall durch ein Minimum an Montageaufwand wieder instandgesetzt werden kann.

Die weitere Beschreibung der Erfindung erfolgt anhand eines Ausführungsbeispieles. In den dazugehörigen Zeichnungen stellen im einzelnen dar:
- Fig.1:: eine Draufsicht des erfindungsgemäßen Kreiselrechens;
- Fig.2:: eine Schnittdarstellung gemäß Schnittlinie II - II in Fig. 1, wobei nur der vordere, in Fahrtrichtung zeigende Zinkenarm mit Zinken teilweise abgebrochen dargestellt ist;
- Fig.3:: eine vergrößerte, teilweise abgebrochene Schnittdarstellung des Kreiselgehäuses mit aufgesetztem Getriebe, ähnlich Fig.2;
- Fig.4:: eine vergrößerte, teilweise abgebrochene Schnittdarstellung der Einzelheit X in Fig.1 gemäß Schnittlinie IV - IV in Fig.2;
- Fig.5:: eine vergrößerte, teilweise abgebrochene Draufsicht der Einzelheit X des Kreiselgehäuses aus Fig.1;
- Fig.6:: eine vergrößerte, teilweise abgebrochene Draufsicht der Einzelheit X des Kreiselgehäuses, ähnlich Fig.5, jedoch mit einer, teilweise in eine Öffnung des Kreiselgehäuses eingesetzte Kompaktbaugruppe, bestehend aus einem Zinkenarm mit einem Traglager sowie einem Steuerarm mit einer Steuerrolle;
- Fig.7:: eine perspektivische, teilweise abgebrochene Darstellung des Kreiselgehäuses mit einer vor einer Öffnung angeordneten Kompaktbaugruppe;

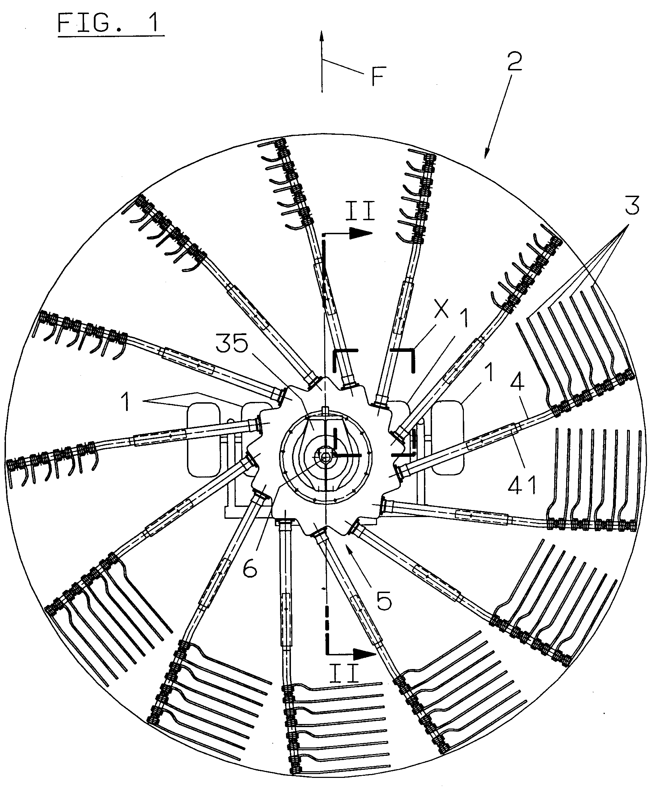

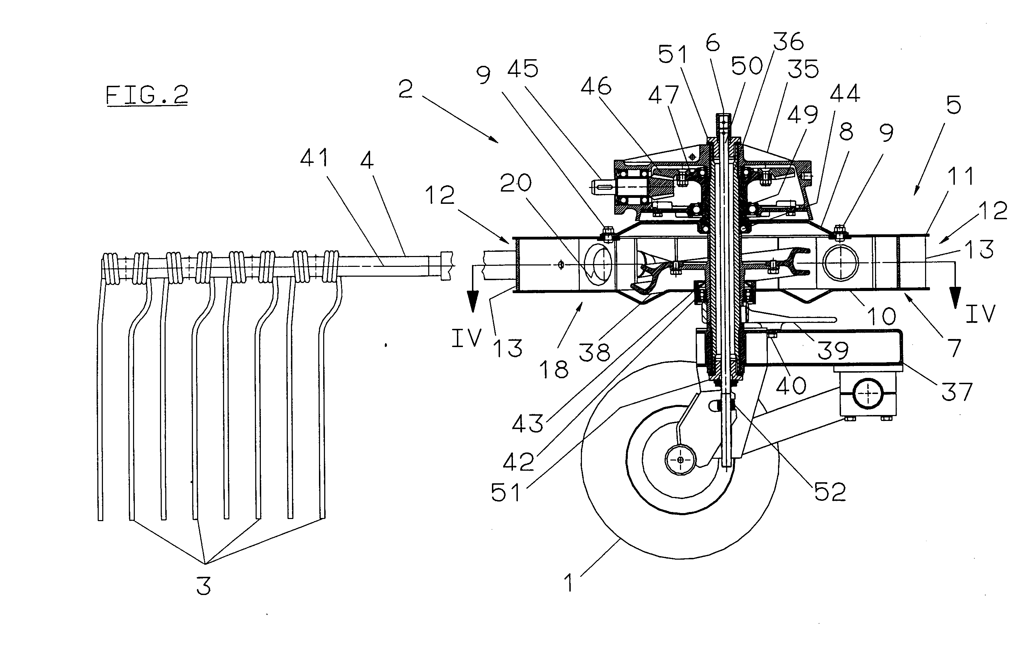

Der in den Figuren 1 und 2 dargestellte, sich über höhenverstellbare Stützräder 1 gegenüber dem Erdboden abstützende Kreiselrechen 2 weist mit Zinken 3 bestückte Zinkenarme 4 auf, die in einem Kreiselgehäuse 5 drehbar gelagert sind und mit diesem gemeinsam um eine etwa senkrecht ausgerichtete Achse 6 rotieren. Die Zinkenarme 4 bestehen aus zwei Rohrhälften, die ineinander steckbar und durch einen Sicherungsstift oder ähnliche Sicherungselemente axial gesichert sind. Derartige Kreiselrechen finden Anwendung an Kreiselschwadern mit einem Kreiselrechen, die über einen nicht dargestellten Tragrahmen an eine Dreipunkthubvorrichtung eines landwirtschaftlichen Zugfahrzeugs angekoppelt werden. Sie können aber auch an Kreiselschwadern mit zwei oder mehr Kreiselrechen eingesetzt werden, wobei die Kreiselrechen nebeneinander oder versetzt zueinander an einem, ebenfalls nicht dargestellten Fahrgestell angeordnet sind, das von einem landwirtschaftlichen Zugfahrzeug gezogen wird.

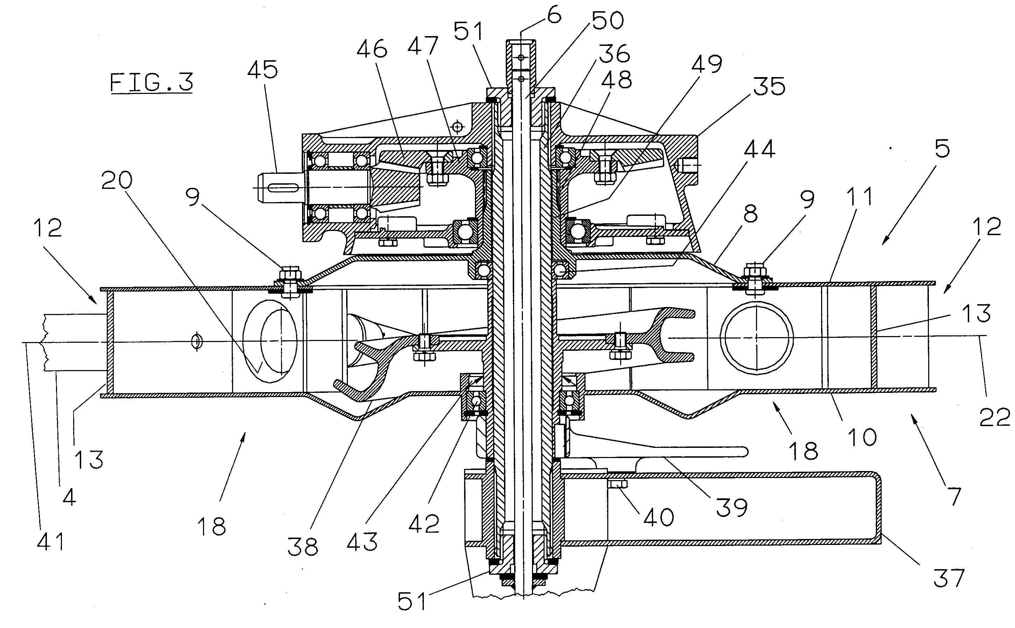

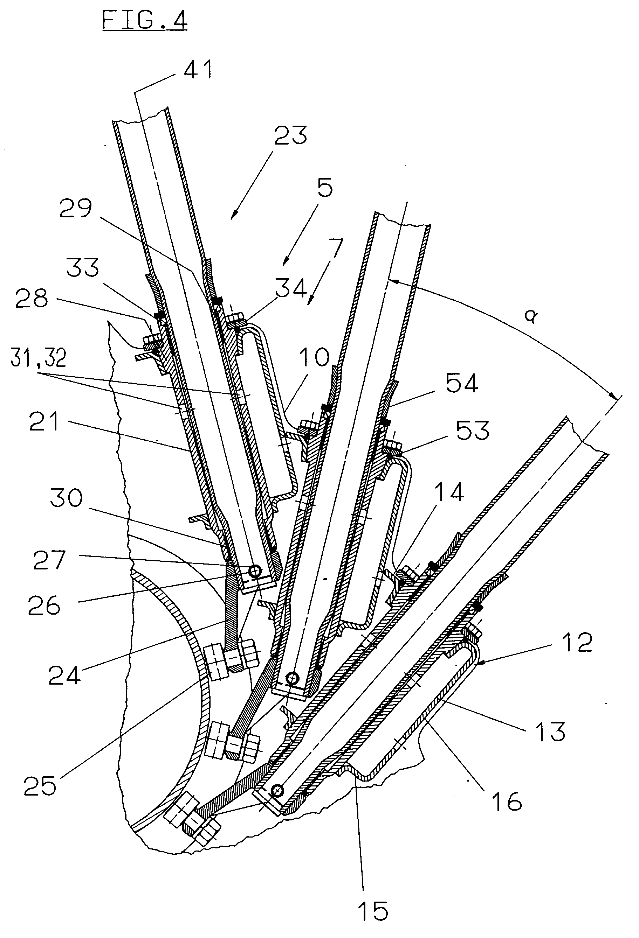

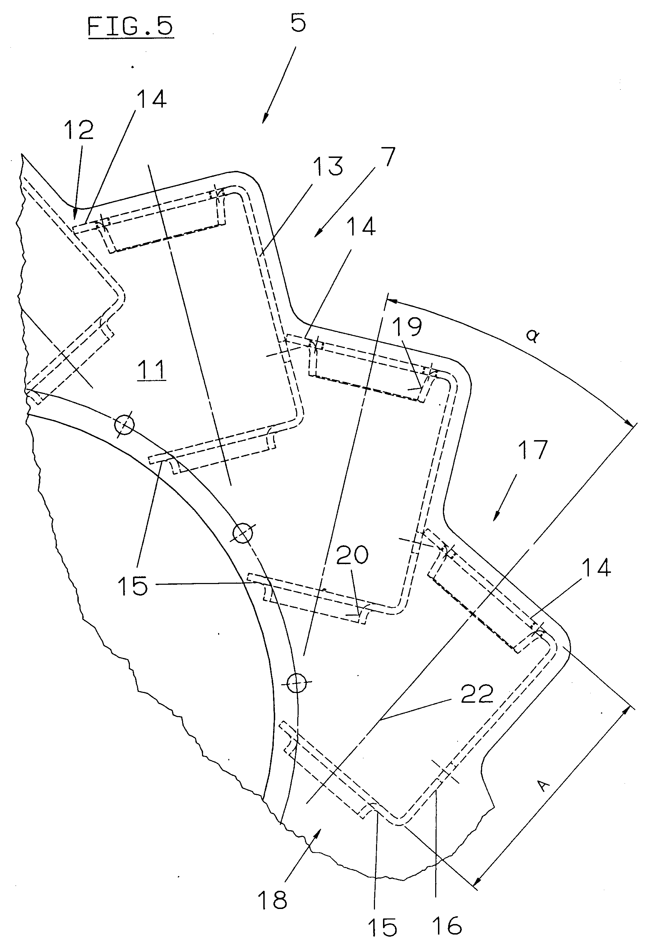

Wie aus Fig.2 und insbesondere aus Fig.3 ersichtlich ist, weist der Kreiselrechen 2 ein Kreiselgehäuse 5 auf, das aus einem in sich formstabilen Gehäuseunterteil 7 und einem deckelförmigen Gehäuseoberteil 8 zusammengesetzt ist. Das Gehäuseunterteil 7 ist ein als Schweißkonstruktion ausgebildetes Blechgehäuse, das eine Bodenplatte 10 sowie eine in einem Abstand dazu parallel angeordnete Deckronde 11 beinhaltet, welche durch einen ringähnlichen Steg 12 miteinander verbunden sind. Der ringähnliche Steg 12 setzt sich aus U-förmig ausgebildeten Taschen 13, die unter einem Winkel α zu jeweils benachbarten Taschen 13 derart aneinandergereiht sind, daß sich die den Zinken 3 zugewandte Flanschseite 14 einer Tasche 13 an eine Längsseite 16 einer benachbarten Tasche 13 anschließt. Der Winkel α ergibt sich aus einem vollen Winkel von 360 Grad aufgeteilt auf die Anzahl der Zinkenarme 4, mit denen ein Kreiselrechen 2 bestückt ist.(Fig.4 und Fig.5)

Die Taschen 13 sind gekantete, U-förmige Blechprofile mit Flanschseiten 14,15 und einer Längsseite 16, wobei die Zuschnittbreite des Blechprofils den Abstand der Bodenplatte 10 zur Deckronde 11 bestimmt. Die Flanschseiten 14,15 weisen Öffnungen 17,18 auf, die in einem Abstand A zueinander und auf einer gemeinsamen Mittelachse 22 angeordnet sind und Aufnahmestellen 19,20 für Traglager 21 bilden. Der Abstand A der Öffnungen 17,18 zueinander sollte möglichst groß ausgeführt sein, da dadurch eine optimale Verteilung der in das Kreiselgehäuse eingeleiteten Kräfte erreicht wird. Der Mindestwert liegt dabei in einem Bereich von 150 bis 180 mm. Die Öffnung 17 an der den Zinken 3 zugewandten Flanschseite 14 der Taschen 13 ist als Kegelbuchse ausgeführt und bildet die Aufnahmestelle 19, wobei der Innendurchmesser in Richtung der Mitte des Kreiselgehäuses 5 kleiner wird. Die zweite, weiter zur Mitte des Kreiselgehäuses 5 angeordnete Öffnung 18 ist als Buchse mit konstantem Innendurchmesser ausgebildet und als Aufnahmestelle 20 bezeichnet. Beide Aufnahmestellen 19,20 sind in einem Arbeitsgang, beispielsweise mit einem Preßwerkzeug hergestellt, so daß diese dadurch eine gemeinsame Mittelachse 22 aufweisen.

Weitere Bestandteile des erfindungsgemäßen Kreiselrechens 2 sind zu Kompaktbaugruppen 23 montierte Zinkenarme 4, auf denen von der für die Lagerung im Kreiselgehäuse 5 vorgesehenen Seite her Traglager 21 aufgeschoben sind, welche einerseits durch eine Anschlaghülse 54 und andererseits durch einen Steuerarm 24 mit einer daran außermittig angebrachten Steuerrolle 25 auf dem Zinkenarm 4 arretiert sind. Der Steuerarm 24 wird durch einen in eine Aufnahmebohrung 26 einsetzbaren Sicherungsstift 27 oder dgl. Sicherungselemente axial auf dem Zinkenarm 4 befestigt. Die Traglager 21 sind dabei als Lagerhülsen ausgebildet, die an der den Zinken 3 zugewandten Seite ein kegelstumpfähnlichen Ansatz 28 mit einem in Richtung zur Mitte des Kreiselgehäuses 5 abnehmenden Durchmesser aufweisen. Die Traglager 21 können vorteilhafterweise aus Leichtmetall, beispielsweise Aluminium gegossen sein, so daß dadurch eine Gewichtseinsparung erreicht wird. Durch jeweils im Endbereich des Traglagers 21 angeordnete Gleitlagerbuchsen 29,30 oder dgl. Lagerungselemente sind die Zinkenarme 4 im Traglager 21 drehbar gelagert, wobei durch Bohrungen 31,32, die etwa im mittleren Bereich der Traglager 21 angeordnet sind, eine Schmierung der Gleitlagerbuchsen 29,30 mit Schmiermittel aus dem Kreiselgehäuse 5 erreicht werden kann. Damit eine dauerhafte Abdichtung der Zinkenarme 4 gegenüber den Traglagern 21 gewährleistet werden kann, ist den Traglagern 21 an der den Zinken 3 zugewandten Seite ein Radialdichtring 33 zugeordnet.

In Fig. 4 wird in einer vergrößerten Schnittdarstellung aufgezeigt, wie eine Kompaktbaugruppe 23 im Kreiselgehäuse 5 aufgenommen und arretiert ist. Der vordere, der Mitte des Kreiselgehäuses 5 zugewandte Teil des Traglagers 21 greift dabei in die Aufnahmestelle 20, während der hintere, den Zinken 3 zugewandte Teil des Traglagers 21 mit dem kegelstumpfähnlichen Ansatz 28 in der Aufnahmestelle 19 eingesetzt ist. Dadurch entsteht in der Aufnahmestelle 19 eine Kegelverbindung. Über die auf der Flanschseite 14 aufgeschraubte Deckplatte 34 ist das Traglager 21 und damit die Kompaktbaugruppe 23 in den Aufnahmestellen 19,20 der Taschen 13 axial gesichert. Zur Abdichtung des Kreiselgehäuses 5 ist in der Trennfuge zwischen der Flanschseite 14 und der Deckplatte 34 ein Dichtring 53 vorgesehen, der bei fest aufgeschraubter Deckplatte 34 das Traglager 21 gegenüber dem Kreiselgehäuse 5 abdichtet. Die Kegelverbindung der Aufnahmestelle 19 mit dem kegelstumpfähnlichen Ansatz 28 des Traglagers 21 kann auch durch die Wahl eines entsprechenden Kegelwinkels derartig ausgeführt sein, daß diese selbsthemmend wird und das Traglager 21 bzw. die Kompaktbaugruppe 23 keiner weiteren axialen Arretierung mehr bedarf.

Zum weiteren Aufbau des Kreiselrechens 2 (Fig.2 und Fig.3) gehört ein Winkelgetriebe 35, das verdrehfest mit einem nicht dargestellten Rahmenteil verbunden ist und das als Halterung für den Kreiselrechen 2 dient. Im oberen Teil des Winkelgetriebes 35 ist ein Hohlwelle 36 gehaltert, auf der unterhalb des Winkelgetriebes 35 das Kreiselgehäuse 5 drehbar gelagert ist und nach unten hin durch eine Halterung 37 für die Stützräder 1 arretiert ist. Weiterhin ist auf der Hohlwelle 36 eine Steuerkurve 38 drehbeweglich angebracht, welche über einen Stellhebel 39 in verschiedenen Verstellpositionen an der Halterung 37 mittels einer Schraube 40 einstellbar ist. Die Wirkung der Steuerkurve 38 besteht darin, die Zinkenarme 4 mit den daran angebrachten Zinken 3 durch Drehung um ihre Mittelachse 41 während einer Umdrehung des Kreiselgehäuses 5 um die etwa senkrechte Achse 6 aus einer Rechstellung in eine hochgeschwenkte Stellung für die Schwadablage und danach wieder in die Rechstellung zu bewegen. Das geschieht dadurch, daß die endseitig an den Zinkenarmen 4 über Steuerarme 24 angebrachten Steuerrollen 25 während der Drehbewegung des Kreiselrechens 2 um die Achse 6 in der Steuerkurve 38 geführt sind.

Die Lagerung des Kreiselgehäuses 5 besteht aus einem im Gehäuseunterteil 7 angeordneten und sich auf der Nabe der Steuerkurve 38 abstützenden Kugellager 42, dem ein Radialdichtring 43 vorgeordnet ist. Dadurch wird auch das Gehäuseunterteil 7 schmiermitteldicht abgedichtet. Ein weiteres Kugellager 44 stützt das Gehäuseoberteil 8 gegenüber der Hohlwelle 36 ab. Das Gehäuseoberteil 8 weist einen nach oben gerichteten Hohlwellenabschnitt 49 auf, der über eine Keilwellenverbindung 48 mit einer mit einem Kegelrad 46 des Winkelgetriebes 35 verschraubten Aufstecknabe 47 verbunden ist. Über eine die Hohlwelle 36 mit den Spannmuttern 51 durchsetzenden Welle 50, die an ihrem unteren Ende mit einem Gewinde versehen ist und deren Gewinde in eine Gewindekulisse 52 eingreift, kann die Einstellhöhe der Stützräder 1 verstellt werden.

Der Antrieb des Kreiselrechens 2 erfolgt über nicht dargestellte Gelenkwellen von einem landwirtschaftlichen Zugfahrzeug aus auf die Ritzelwelle 45 des Winkelgetriebes 35 und wird von dort aus über die dem Kegelrad 46 zugeordnete Aufstecknabe 47, die durch die Heilwellenverbindung 48 formschlüssig mit dem in dem Gehäuseoberteil 8 eingesetzten Hohlwellenabschnitt 49 verbunden ist, auf das Kreiselgehäuse 5 übertragen.

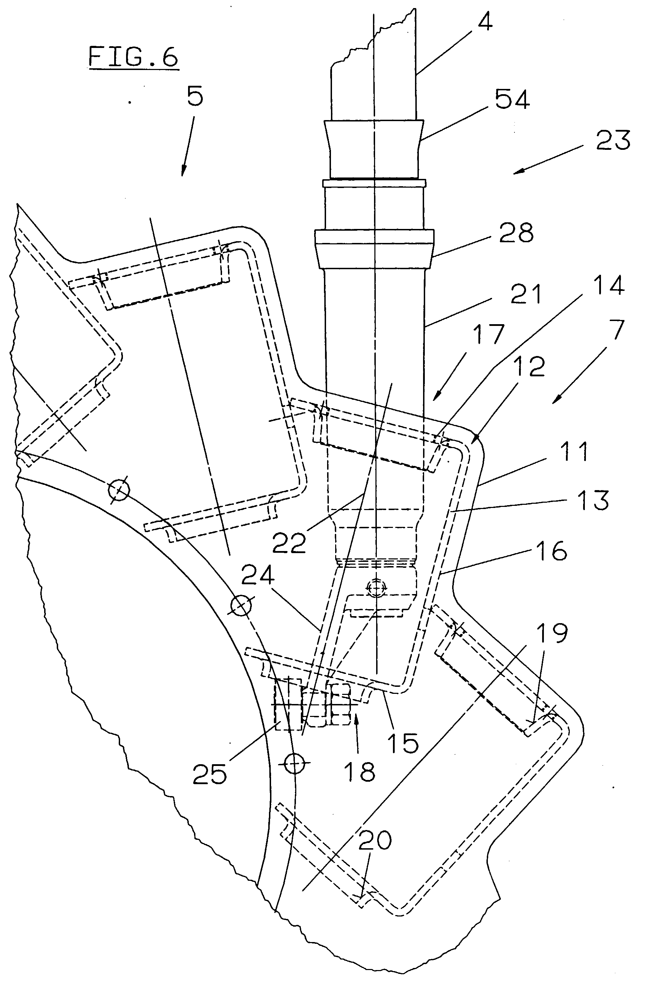

In Fig.6 ist eine teilweise, abgebrochene Ansicht des Kreiselgehäuses 5 mit der noch nicht ganz eingeführten, ebenfalls abgebrochen dargestellten Kompaktbaugruppe 23 zu sehen. Aus dieser Darstellung wird deutlich, daß beim Einsetzen der Kompaktbaugruppe 23 in die dafür vorgesehenen Aufnahmestellen 19,20 der Taschen 13 die Kompaktbaugruppe 23 zunächst leicht verschwenkt eingeführt werden muß, bis die am Steuerarm 24 angeordnete Steuerrolle 25 die Aufnahmestelle 20 passiert hat. Dazu wird nahezu der gesamte Freiraum zwischen den Aufnahmestellen 19,20 der Taschen 13 ausgenutzt.

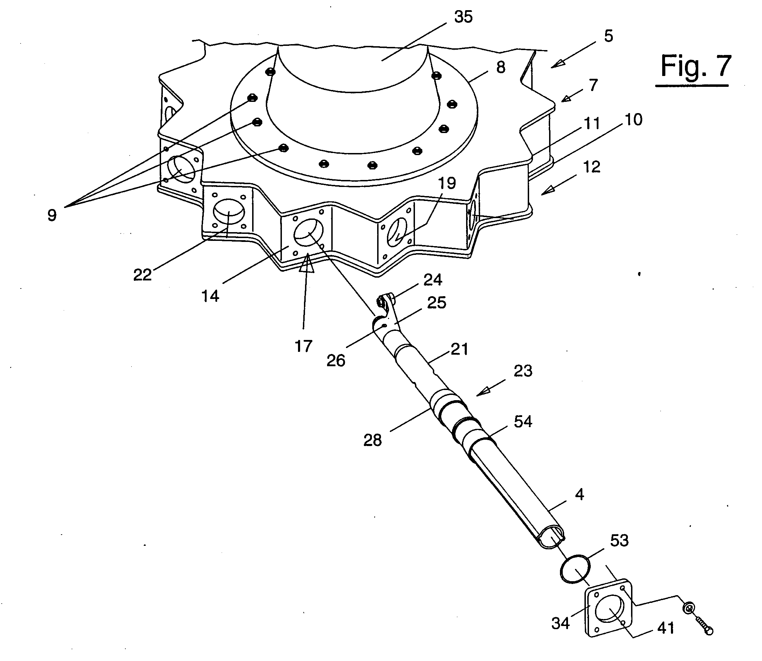

Fig.7 zeigt eine perspektivische Darstellung des Kreiselgehäuses 5 mit dem aufgesetzten Winkelgetriebe 35 und einer vor der Öffnung 17 angeordneten, teilweise abgebrochen dargestellten Kompaktbaugruppe 23. Diese Darstellung dient einer besseren, räumlichen Veranschaulichung der Erfindung. Wie hier aufgezeigt, ist es nach der Erfindung möglich, die mit einem Traglager 21 sowie einem Steuerarm 24 mit Steuerrolle 25 versehenen Zinkenarme 4 als Kompaktbaugruppe 23 in das Kreiselgehäuse 5 derartig einzusetzen, daß das Kreiselgehäuse 5 eine gegen Austritt von Schmiermitteln abgedichtete Einheit ist. Weiterhin wird aus dieser Figur deutlich, daß im Reparaturfall mit einem Minimum an Montageaufwand beispielsweise ein defekter Zinkenarm ausgewechselt werden kann.

## Patentansprüche

1. Kreiselrechen für eine Heuwerbungsmaschine, insbesondere für einen Kreiselschwader, mit um eine etwa senkrecht ausgerichtete Achse (6) umlaufenden, an ihren äußeren Enden mit Zinken (3) bestückten Zinkenarmen (4), die innerhalb eines geschlossenen Kreiselgehäuses (5) in Traglagern drehbar gelagert sind und die mittels einer Steuerkurve gesteuert werden, dadurch gekennzeichnet, daß die Zinkenarme (4) an dem für die Lagerung innerhalb des Kreiselgehäuses (5) vorgesehenen Ende mit einer außermittig angeordneten Steuerrolle (25) und einem axial auf dem Zinkenarm (4) gesicherten Traglager (21) ausgebildet sind und so eine Kompaktbaugruppe (23) bilden, die in mindestens zwei, im Abstand (A) hintereinander liegende und jeweils eine Aufnahmestelle (19,20) bildende Öffnungen (17,18) innerhalb des Kreiselgehäuses (5) einführbar und arretierbar ist, und daß die die Aufnahmestellen (19,20) bildenden Öffnungen (17,18) eine Halterung der Traglager (21) und damit der Zinkenarme (4) bilden.

2. Kreiselrechen für eine Heuwerbungsmaschine nach Anspruch 1, dadurch gekennzeichnet, daß die Traglager (21) von dem für die Lagerung im Kreiselgehäuse (5) vorgesehenen Ende her auf die Zinkenarme (4) aufschiebbar sind.

3. Kreiselrechen für eine Heuwerbungsmaschine nach einem der Ansprüche 1 oder 2, dadurch gekennzeichnet, daß die Traglager (21) auf den Zinkenarmen (4) einerseits durch eine Anschlaghülse (54) und andererseits durch einen mit einer Aufnahmebohrung (26)versehenen, aufgeschobenen und mit einem Sicherungsstift (27) gesicherten Steuerarm (24) axial arretiert sind.

4. Kreiselrechen für eine Heuwerbungsmaschine nach einem der Ansprüche 1 bis 3, dadurch gekennzeichnet, daß der Steuerarm (24) die außermittig angeordnete Steuerrolle (25) aufweist.

5. Kreiselrechen für eine Heuwerbungsmaschine nach einem der Ansprüche 1 bis 4, dadurch gekennzeichnet, daß die Zinkenarme (4) in den Traglagern (21) drehbar gelagert sind.

6. Kreiselrechen für eine Heuwerbungsmaschine nach einem der Ansprüche 1 bis 5, dadurch gekennzeichnet, daß die Zinkenarme (4) durch Gleitlagerbuchsen (29,30) in den Traglagern (21) gelagert sind.

7. Kreiselrechen für eine Heuwerbungsmaschine nach einem der Ansprüche 1 bis 6, dadurch gekennzeichnet, daß ein Zinkenarm (4) mit einem aufgeschobenen Traglager (21) und einem, das Traglager (21) arretierenden Steuerarm (24) mit einer Steuerrolle (25) die Kompaktbaugruppe (23) bildet.

8. Kreiselrechen für eine Heuwerbungsmaschine nach einem der Ansprüche 1 bis 7, dadurch gekennzeichnet, daß das Traglager (21) als Lagerhülse ausgebildet ist, welche an der den Zinken (3) zugewandten Seite einen kegelstumpfähnlichen Ansatz (28) aufweist.

9. Kreiselrechen für eine Heuwerbungsmaschine nach Anspruch 8, dadurch gekennzeichnet, daß das Traglager (21) aus Leichtmetall hergestellt ist.

10. Kreiselrechen für eine Heuwerbungsmaschine nach einem der Ansprüche 1 bis 9, dadurch gekennzeichnet, daß den Traglagern (21) auf der den Zinken (3) zugewandten Seite ein Radialdichtring (33) zugeordnet ist, der eine Abdichtung des Traglagers (21) gegenüber dem Zinkenarm (4) bewirkt.

11. Kreiselrechen für eine Heuwerbungsmaschine nach einem der Ansprüche 1 bis 10, dadurch gekennzeichnet, daß das Traglager (21) in seinem, in Längsrichtung gesehen, mittleren Bereich Bohrungen (31,32) aufweist.

12. Kreiselrechen für eine Heuwerbungsmaschine nach einem der Ansprüche 1 bis 11, dadurch gekennzeichnet, daß das Kreiselgehäuse (5) aus einem in sich formstabilen Gehäuseunterteil (7) und einem deckelförmigen Gehäuseoberteil (8) besteht.

13. Kreiselrechen für eine Heuwerbungsmaschine nach einem der Ansprüche 1 bis 12, dadurch gekennzeichnet, daß das Gehäuseunterteil (7) eine Bodenplatte (10) sowie eine parallel und in einem Abstand zur Bodenplatte (10) verlaufende Deckronde (11) beinhaltet, welche durch einen ringähnlichen Steg (12) miteinander verbunden sind.

14. Kreiselrechen für eine Heuwerbungsmaschine nach Anspruch 13, dadurch gekennzeichnet, daß der Steg (12) aus U-förmig ausgebildeten Taschen (13) besteht, welche unter einem Winkel (α) zu jeweils benachbarten Taschen (13) derartig aneinander gereiht sind, daß sich die den Zinken (3) zugewandte Flanschseite (14) einer Tasche (13) an eine Längsseite (16) einer benachbarten Tasche (13) anschließt.

15. Kreiselrechen für eine Heuwerbungsmaschine nach einem der Ansprüche 1 bis 14, dadurch gekennzeichnet, daß die den Zinken (3) zugewandte Flanschseite (14) und die der Mitte des Kreiselgehäuses (5) zugewandte Flanschseite (15) der Taschen (13) die Öffnungen (17,18) aufweisen.

16. Kreiselrechen für eine Heuwerbungsmaschine nach einem der Ansprüche 1 bis 15, dadurch gekennzeichnet, daß die Öffnungen (17,18) in den Flanschseiten (14,15) der Taschen (13) in einem Abstand (A) zueinander angeordnet sind und eine gemeinsame Mittelachse (22) haben.

17. Kreiselrechen für eine Heuwerbungsmaschine nach Anspruch 16, dadurch gekennzeichnet, daß der Abstand (A), in Richtung der Mittelachse (22) gemessen, mindestens im Bereich von 150 bis 180 mm liegt.

18. Kreiselrechen für eine Heuwerbungsmaschine nach einem der Ansprüche 1 bis 11, dadurch gekennzeichnet, daß die Öffnungen (17,18) in den Flanschseiten (14,15) der Taschen (13) die Aufnahmestellen (19,20) für die Traglager (21) bilden.

19. Kreiselrechen für eine Heuwerbungsmaschine nach einem der Ansprüche 1 bis 18, dadurch gekennzeichnet, daß die Öffnung (17) in der den Zinken (3) zugewandten Flanschseite (14) der Taschen (13) als Kegelbuchse mit einem zur Mitte des Kreiselgehäuses (5) hin kleiner werdenden Innendurchmesser ausgebildet ist.

20. Kreiselrechen für eine Heuwerbungsmaschine nach einem der Ansprüche 1 bis 19, dadurch gekennzeichnet, daß die Öffnung (18) in der der Mitte des Kreiselgehäuses (5) zugewandten Flanschseite (15) der Taschen (13) eine Buchse mit konstantem Innendurchmesser ist.

21. Kreiselrechen für eine Heuwerbungsmaschine nach einem der Ansprüche 1 bis 20, dadurch gekennzeichnet, daß die U-förmigen Taschen (13) mit den in den Flanschseiten (14,15) angeordneten Öffnungen (17,18) als Preßteil ausgeführt sind.

22. Kreiselrechen für eine Heuwerbungsmaschine nach einem der Ansprüche 1 bis 21, dadurch gekennzeichnet, daß das in den Öffnungen (17,18) der Taschen (13) eingesetzte Traglager (21) durch eine auf der den Zinken (3) zugewandten Flanschseite (14) der Taschen (13) aufschraubbare Deckplatte (34) in Richtung der Mittelachse der Zinkenarme (4) axial arretierbar ist.

23. Kreiselrechen für eine Heuwerbungsmaschine nach einem der Ansprüche 1 bis 22, dadurch gekennzeichnet, daß das in den Öffnungen (17,18) der Taschen (13) eingesetzte Traglager (21) dadurch in Richtung der Mittelachse der Zinkenarme (4) axial arretiert ist, daß die Kegelverbindung in der den Zinken (3) zugewandten Aufnahmestelle (19) selbsthemmend ausgebildet ist.

24. Kreiselrechen für eine Heuwerbungsmaschine nach einem der Ansprüche 1 bis 23, dadurch gekennzeichnet, daß in der Trennfuge zwischen der Flanschseite (14) und der Deckplatte (34) ein Dichtring (53) eingesetzt ist.

25. Kreiselrechen für eine Heuwerbungsmaschine nach Anspruch 24, dadurch gekennzeichnet, daß der Dichtring (53) ein O-Dichtring ist.

## Claims

1. A rotary rake for a hay making machine, particularly for a rotary swathe-layer with, rotating about a substantially vertically orientated axis (6) and provided at its outer ends with tine arms (4) fitted with tines (3) and mounted to rotate in supporting bearings within a closed rotary housing (5) and which are controlled by a cam, characterised in that the tine arms (4), at the end envisaged for mounting inside the rotary housing (5), are constructed with an eccentrically disposed cam follower (25) and a supporting bearing (21) axially secured on the tine arm (4) so forming a contact assembly (23) and which is adapted to be inserted into and locked in at least two apertures (17, 18) within the rotary housing (5) and which, being spaced one behind the other at a distance (A), respectively form receiving points (19, 20) and in that the apertures (17, 18) which form the receiving points (19, 20) form a support for the bearings (21) and therefore of the tine arms (4).

2. A rotary rake for a hay making machine according to claim 1, characterised in that the support bearing (21) can be pushed onto the tine arms (4) from the end intended for mounting in the rotary housing (5).

3. A rotary rake for a hay making machine according to one of claims 1 or 2, characterised in that the support bearings (21) pushed onto the fine arms (4) are axially locked at one end by an abutment sleeve (54) and at the other by a control arm (24) provided with a receiving bore (26) and which is pushed on and secured with a locking pin (27).

4. A rotary rake for a hay making machine according to one of claims 1 to 3, characterised in that the control arm (24) comprises the eccentrically disposed cam follower (25).

5. A rotary rake for a hay making machine according to one of claims 1 to 4, characterised in that the tine arms (4) are rotatably mounted in the support bearings (21).

6. A rotary rake for a hay making machine according to one of claims 1 to 5, characterised in that the tine arms (4) are mounted in the support bearings (21) by plain bearing bushes (29, 30).

7. A rotary rake for a hay making machine according to one of claims 1 to 6, characterised in that a tine arm (4) with a pushed-on support bearing (21) and a control arm (24) locking the support bearing (21) and having a cam follower (25), forms the compact assembly (23).

8. A rotary rake for a hay making machine according to one of claims 1 to 7, characterised in that the support bearing (21) is constructed as a bearing sleeve which has a frustoconical-like projection (28) on the side which faces the tines (3).

9. A rotary rake for a hay making machine according to claim 8, characterised in that the support bearing (21) is made from light metal.

10. A rotary rake for a hay making machine according to one of claims 1 to 9, characterised in that there is associated with the support bearings (21) on the side facing the tines (3) a radial seal (33) which has the effect of sealing the support bearing (21) in respect of the tine arm (4).

11. A rotary rake for a hay making machine according to one of claims 1 to 10, characterised in that in its middle portion, when viewed in the longitudinal direction, the support bearing (21) has bores (31, 32).

12. A rotary rake for a hay making machine according to one of claims 1 to 11, characterised in that the rotary housing (5) consists of a housing bottom part (7) which is form-stable in itself and a housing upper part (8) which is shaped like a cover.

13. A rotary rake for a hay making machine according to one of claims 1 to 12, characterised in that the housing bottom part (7) contains a bottom plate (10) and also, extending parallel with and at a distance from the bottom plate (10), a circular cover (11) and which are connected to each other by a ring-like web (12).

14. A rotary rake for a hay making machine according to claim 13, characterised in that the web (12) consists of U-shaped pockets (13) which are so adjacently arranged in respect of one another at an angle (α) to the respectively adjacent pockets (13) that the flange side (14) of a pocket (13) which is towards the tines (3) has one long side (16) adjacent to a neighbouring pocket (13).

15. A rotary rake for a hay making machine according to one of claims 1 to 14, characterised in that the flange side (14) which is towards the tines (3) and the flange side (15) of the pockets (13) which is towards the middle of the rotary housing (5) comprise the apertures (17, 18).

16. A rotary rake for a hay making machine according to one of claims 1 to 15, characterised in that the apertures (17, 18) in the flange sides (14, 15) of the pockets (13) are disposed at a distance (A) from one another and have a common central axis (22).

17. A rotary rake for a hay making machine according to claim 16, characterised in that, measured in the direction of the central axis (22), the distance (A) is at least in the range from 150 to 180 mm.

18. A rotary rake for a hay making machine according to one of claims 1 to 17, characterised in that the apertures (17, 18) in the flange sides (14, 15) of the pocket (13) form the receiving points (19, 20) for the support bearings (21).

19. A rotary rake for a hay making machine according to one of claims 1 to 18, characterised in that the aperture (17) in the flange side (14) of the pockets (13) which is towards the tines (3) is constructed as a conical socket having an inside diameter which decreases in size towards the centre of the rotary housing (5).

20. A rotary rake for a hay making machine according to one of claims 1 to 19, characterised in that the aperture (18) in the flange side (15) of the pockets (13) which is towards the centre of the rotary housing (5) is a bush of constant inside diameter.

21. A rotary rake for a hay making machine according to one of claims 1 to 20, characterised in that the U-shaped pockets (13) are constructed as pressed parts with apertures (17, 18) disposed in the flange sides (14, 15).

22. A rotary rake for a hay making machine according to one of claims 1 to 21, characterised in that the support bearing (21) inserted into the apertures (17, 18) in the pockets (13) can be axially locked in the direction of the central axis of the tine arms (4) by a cover plate (34) which can be screwed onto the flange side (14) of the pockets (13) which is towards the tines (3).

23. A rotary rake for a hay making machine according to one of claims 1 to 22, characterised in that the support bearing (21) inserted into the apertures (17, 18) of the pockets (13) is axially locked in the direction of the central axis of the tine arms (4) in that the conical joint in the receiving point (19) which faces the tines (3) is of self-locking construction.

24. A rotary rake for a hay making machine according to one of claims 1 to 23, characterised in that a sealing ring (53) is inserted into the joints between the flange side (14) and the cover plate (34).

25. A rotary rake for a hay making machine according to claim 24, characterised in that the sealing ring (53) is an O-ring.

## Revendications

1. Rotor de râtelage pour une machine de fenaison, notamment une andaineuse à rotors, comprenant des bras portedents (4) tournant autour d'un axe (6) sensiblement vertical, et dont les extrémités extérieures sont garnies de dents (3) qui sont montées en rotation dans des paliers de support dans un carter de rotor (5), fermé, et qui sont commandées par une courbe de commande,
caractérisé en ce que
l'extrémité des bras porte-dents (4) prévue pour être logée dans le carter de rotor (5) comporte un galet de commande (25) décentré et un palier de support (21) fixé axialement sur le bras porte-dents (4), pour constituer ainsi un ensemble compact (23) qui s'introduit et se bloque dans au moins deux orifices (17, 18) du carter de rotor (5), ces deux ouvertures étant situées l'une derrière l'autre à une distance (A) et formant chaque fois une zone de réception (19, 20), et
les ouvertures (17, 18) formant une zone de réception (19, 20) constituent un support pour les paliers de support (21) et le bras porte-dents (4) correspondant.

2. Rotor pour machine de fenaison selon la revendication 1,
caractérisé en ce que
les paliers de support (21) peuvent être coulissables sur les bras porte-dents (4) à partir de l'extrémité prévue pour être logée dans le carter de rotor (5).

3. Rotor pour machine de fenaison selon l'une des revendications 1 ou 2,
caractérisé en ce que
les paliers de support (21) sont emmanchés sur les bras porte-dents (4) munis à une extrémité d'un manchon de butée (54) et à l'autre extrémité d'un perçage de réception (26) et ils sont bloqués axialement par un bras de commande (24) fixé par une goupille (27).

4. Rotor pour machine de fenaison selon l'une des revendications 1 à 3,
caractérisé en ce que
le bras de commande (24) comporte le galet de commande (25) décentré.

5. Rotor pour machine de fenaison selon l'une quelconque des revendications 1 à 4,
caractérisé en ce que
les bras porte-dents (4) sont montés à rotation dans les paliers de support (21).

6. Rotor pour machine de fenaison selon l'une quelconque des revendications 1 à 5,
caractérisé en ce que
les bras porte-dents (4) sont montés dans les bras de support (21) par des paliers lisses (29, 30).

7. Rotor pour machine de fenaison selon l'une quelconque des revendications 1 à 6,
caractérisé en ce qu'
un bras porte-dents (4) forme, avec un palier de support (21), coulissé, et un bras de commande (24) bloquant le palier du support (21), muni d'un galet de commande (25), l'ensemble formant une construction compact (23).

8. Rotor pour machine de fenaison selon l'une quelconque des revendications 1 à 7,
caractérisé en ce que
le palier de support (21) est en forme de manchon de palier ayant, sur son côté tourné vers le dents (3), un prolongement (28) en forme de tronc de cône.

9. Rotor pour machine de fenaison selon la revendication 8,
caractérisé en ce que
le palier de support (21) est en métal léger.

10. Rotor pour machine de fenaison selon l'une quelconque des revendications 1 à 9,
caractérisé en ce qu'
un joint d'étanchéité radial (33) est associé aux côtés des paliers de support tournés vers les dents (3), ce joint assurant l'étanchéité du palier de support (21) par rapport au bras porte-dents (4).

11. Rotor pour machine de fenaison selon l'une quelconque des revendications 1 à 10,
caractérisé en ce que
le palier de support (21) comporte des perçages (31, 32) dans sa zone médiane selon la direction longitudinale.

12. Rotor pour machine de fenaison selon l'une quelconque des revendications 1 à 11,
caractérisé en ce que
le carter de rotor (5) est formé d'une partie inférieure (7) de forme stable et d'une partie supérieure (8) constituant un couvercle.

13. Rotor pour machine de fenaison selon l'une quelconque des revendications 1 à 12,
caractérisé en ce que
la partie inférieure (7) du carter comporte une plaque de fond (10) ainsi qu'une couronne (11) formant couvercle, parallèle à la plaque de fond et à une certaine distance de celle-ci, ces deux éléments étant réunis par une âme annulaire (12).

14. Rotor pour machine de fenaison selon la revendication 13,
caractérisé en ce que
l'âme (12) comporte des poches (13) en forme de U, disposées successivement suivant un angle (α) par rapport aux poches voisines (13) de façon que le côté de bride (14) tourné vers les dents (3) d'une poche (13) fasse suite à un grand côté (16) d'une poche voisine (13).

15. Rotor pour machine de fenaison selon l'une quelconque des revendications 1 à 14,
caractérisé en ce que
le côté de bride (14) tourné vers les dents (3) et le côté de bride (15) tourné vers le milieu du carter de rotor (5) des poches (13) comportent les ouvertures (17, 18).

16. Rotor pour machine de fenaison selon l'une quelconque des revendications 1 à 15,
caractérisé en ce que
les ouvertures (17, 18) dans les côtés de bride (14, 15) des poches (13) sont écartées d'une distance (A) et ont un axe (22) commun.

17. Rotor pour machine de fenaison selon la revendication 16,
caractérisé en ce que
la distance (A), mesurée dans la direction de l'axe médian (22), est au moins de l'ordre de 150 à 180 mm.

18. Rotor pour machine de fenaison selon l'une quelconque des revendications 1 à 17,
caractérisé en ce que
les ouvertures (17, 18) dans les côtés de bride (14, 15) des poches (13) forment les zones de réception (19, 20) pour les paliers de support (21).

19. Rotor pour machine de fenaison selon l'une quelconque des revendications 1 à 18,
caractérisé en ce que
l'ouverture (17), dans le côté de bride (14), tournée vers les dents (3) des poches (13) est réalisée sous la forme d'un manchon conique avec un diamètre intérieur diminuant vers le centre du carter de rotor (5).

20. Rotor pour machine de fenaison selon l'une quelconque des revendications 1 à 19,
caractérisé en ce que
l'ouverture (18), dans le côté de bride (14) des poches (13), du côté du milieu du carter de rotor (5), est un manchon de diamètre intérieur constant.

21. Rotor pour machine de fenaison selon l'une quelconque des revendications 1 à 20,
caractérisé en ce que
les poches (13) en forme de U, avec les ouvertures (17, 18) prévues dans les parties de bride (14, 15), sont réalisées sous la forme de pièces pressées.

22. Rotor pour machine de fenaison selon l'une quelconque des revendications 1 à 21,
caractérisé en ce que
les paliers de support (21) logés dans les ouvertures (17, 18) des poches (13) sont bloqués axialement dans la direction de l'axe central des bras porte-dents (4), par une plaque de couverture (34) vissée sur le côté de bride (14) des poches (13) tournées vers les dents (3).

23. Rotor pour machine de fenaison selon l'une quelconque des revendications 1 à 22,
caractérisé en ce que
le palier de support (21) logé dans les ouvertures (17, 18) des poches (13) est bloqué axialement dans la direction de l'axe médian des bras porte-dents (4) de façon que la liaison conique de la zone de réception (19) tournée vers les dents (3) est autobloquante.

24. Rotor pour machine de fenaison selon l'une quelconque des revendications 1 à 23,
caractérisé en ce que
un joint d'étanchéité (53) est prévu dans les joints, entre le côté de bride (14) et la plaque de recouvrement (34).

25. Rotor pour machine de fenaison selon la revendication 24,
caractérisé en ce que
le joint d'étanchéité (53) est un joint torique.
